# EUROPÄISCHE PATENTSCHRIFT

(11) **EP 0 739 072 B1**
(45) Veröffentlichungstag und Bekanntmachung des Hinweises auf die Patenterteilung: **09.06.1999**
(21) Anmeldenummer: 96104881.6
(22) Anmeldetag: 27.03.1996
(51) Int. Cl.: H02H 3/33, H02H 1/06

(54) **Fehlerstromschutzschalter**
Earth leakage circuit breaker
Disjoncteur à courant de défaut

(30) Priorität: 20.04.1995 DE 19514641
(43) Veröffentlichungstag der Anmeldung: 23.10.1996
(73) Patentinhaber: HEINRICH KOPP AG, D-63796 Kahl (DE)
(72) Erfinder: Flohr, Peter, Dipl.-Ing., 63796 Kahl (DE)
(74) Vertreter: Reinhard - Skuhra - Weise & Partner

(56) Entgegenhaltungen:
- EP-A- 0 273 255
- EP-A- 0 570 603
- EP-A- 0 614 259
- FR-A- 2 538 179
- SOLLEDER R: "ALL FAULT CURRENTS UNDER CONTROL UC-SENSITIVE RESIDUAL-CURRENT PROTECTIVE DEVICES FOR INDUSTRIAL APPLICATIONS" DRIVE AND CONTROL, Bd. 3, Nr. 4, 1.November 1993, Seiten 22-25, XP000439177

## Beschreibung

Die Erfindung betrifft einen Fehlerstromschutzschalter gemäß dem Oberbegriff des Patentanspruchs 1.

Ein Fehlerstromschutzschalter entsprechend dem Oberbegriff des Patentanspruchs 1 ist in der DE 43 43 560 A1 beschrieben. Dieser Fehlerstromschutzschalter erreicht mittels einer Speicherschaltung eine Zeitverzögerung bei der Auslösung. Die Erfassung eines Fehlerstromes erfolgt hierbei durch Feststellung einer Differenz der auf den beiden Speiseleitungen fließenden Strömen. Hierdurch wird sichergestellt, daß ein z.B. mit einem Isolationsfehler behafteter Stromkreis abgeschaltet und der Anwender vor einer gefährlichen Durchströmung durch elektrischen Strom geschützt wird.

Hochempfindliche Fehlerstromschutzschalter liefern darüber hinaus einen gewissen Schutz bei direktem Berühren spannungsführender Teile, indem der über die berührende Person zur Erde abfließende Strom (Fehlerstrom) die Auslösung des Fehlerstromschutzschalters einleitet. Ein derart empfindlicher Fehlerstromschutzschalter reagiert naturgemäß sensibel auf Störimpulse aus dem Netz, wie sie z.B. durch Schaltvorgänge oder atmosphärische Störungen hervorgerufen werden. Eine derartige Sensibilität ist jedoch unerwünscht.

Fehlerstromschutzschalter werden in weit verzweigten Installationsanlagen auch in Reihenschaltung angewandt. Bei einer derartigen, in Kaskaden geschalteten Anordnung von Fehlerstromschutzschaltern wird eine Fehlerstromselektivität erwartet, derart, daß nur der dem Fehlerort am nächsten liegende Fehlerstromschutzschalter abschaltet bzw. auslöst, und zwar unabhängig von der Höhe des Fehlerstroms, während die übrigen Fehlerstromschutzschalter nicht auslösen sollen. Die Realisierung dieser Forderung mit netzspannungsunabhängigen Einrichtungen ist technisch schwierig und aufwendig.

Der Erfindung liegt die Aufgabe zugrunde, einen Fehlerstromschutzschalter der eingangs genannten Art so zu verbessern, daß ein Ansprechen auf Störimpulse aus dem Netz, welche z.B. durch Schaltvorgänge oder atmosphärische Störungen hervorgerufen werden, verhindert wird.

Diese Aufgabe wird erfindungsgemäß durch die Merkmale im kennzeichnenden Teil des Patentanspruchs 1 gelöst.

Weitere Ausgestaltungen der Erfindung ergeben sich aus den Unteransprüchen.

Die Erfindung schafft einen Fehlerstromschutzschalter, der mittels einer Auswerteelektronik entweder eine erste Betriebsart aufweist, während welcher z.B. eine Reaktion auf Störimpulse aus dem Netz verhindert wird, oder eine zweite Betriebsart, während der eine Auslösung des Fehlerstromschutzschalters in bekannter Weise durch Erfassung eines Summenstroms bzw. der Differenz der auf den beiden Speiseleitungen fließenden Ströme erfolgt. Die jeweilige Betriebsart wählt der Fehlerstromschutzschalter selbst abhängig von dem Vorhandensein der Netzspannung aus.

Bei Ausfall der Netzspannung wählt der Fehlerstromschutzschalter die zweite Betriebsart aus, wobei die Auslösung kurzverzögert, selektiv, gleichstromsensitiv oder selbstüberwacht sowie in logischer Kombination dieser Eigenschaften erfolgen kann.

Mit der Erfindung ist es möglich, eine kurze Verzögerung sowie bei Anwendung von mehreren, z.B. kaskadenförmig geschalteten Fehlerstromschutzschaltern mit unterschiedlichen Nennfehlerströmen und verschiedenen Nennströmen Selektivität zu erreichen. Dies wird mit einer netzspannungsabhängigen elektronischen Verzögerung mit vertretbarem Aufwand realisiert.

Der erfindungsgemäße Fehlerstromschutzschalter arbeitet somit in der ersten Betriebsart netzspannungsabhängig und in der zweiten Betriebsart netzspannungsunabhängig.

Nachfolgend werden unter Bezugnahme auf die Zeichnung eine bevorzugte Ausführungsform eines FI-Schalters zur Erläuterung weiterer Merkmale beschrieben.

Es zeigen:
Fig. 1 eine schematische Darstellung des erfindungsgemäßen Fehlerstromschutzschalters,
Fig. 2 eine Darstellung zur Erläuterung der Anordnung mehrerer Fehlerstromschutzschalter, z.B. in Kaskadenschaltung,
Fig. 3 ein Diagramm zur Erläuterung der Auslösebereiche von beispielsweise drei zueinander absolut selektiver Fehlerstromschutzschalter, und
Fig. 4 eine Ausführungsform des erfindungsgemäßen Fehlerstromschutzschalters mit einem vom Anwender zu bedienenden Bedienschalter.

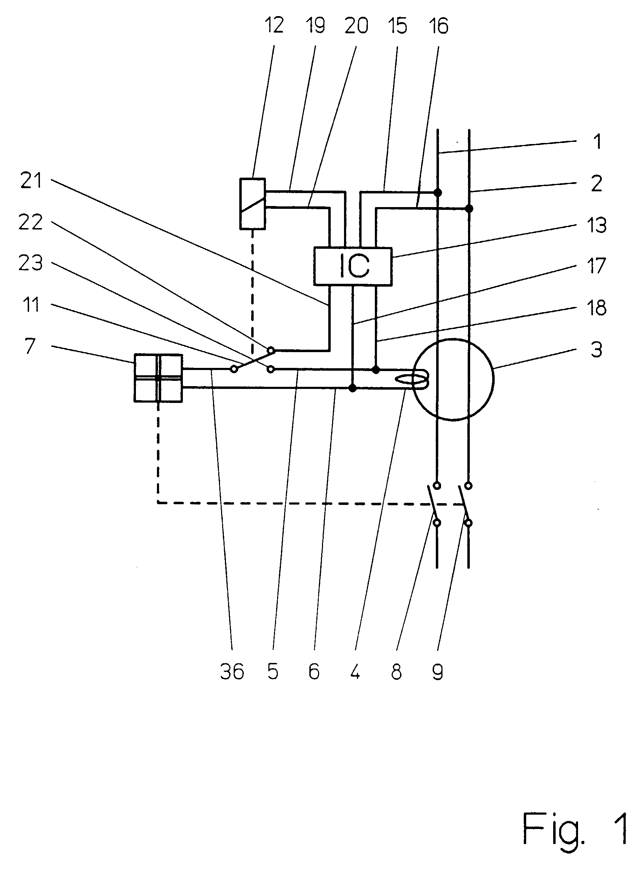

In Fig. 1 ist eine bevorzugte Ausführungsform eines Fehlerstromschutzschalters dargestellt. In Fig. 1 sind Speiseleitungen 1, 2 durch einen Summenstromwandler 3 geführt. Der Summenstromwandler 3 weist eine Sekundärwicklung 4 auf, die über Leitungen 5, 6 an ein Auslöseorgan 7 geschaltet sind, das beispielsweise in Form eines Relais in Verbindung mit einem Schaltschloß vorgesehen sein kann. Mittels des Auslöseorgans 7 werden Schaltkontakte 8, 9 geschaltet, die ihrerseits in den Speiseleitungen 1, 2 angeordnet sind, um im Auslösefall die Speiseleitungen 1, 2 zu unterbrechen.

In den Leitungen 5, 6, vorzugsweise in der Leitung 5, befindet sich ein Steuerkontakt 11 eines Umschaltrelais 12, dessen Kontaktelemente 22, 23 über das Umschaltrelais 12 angesteuert werden. Anstelle des Steuerkontaktes 11 kann ein elektronisches Schaltelement vorgesehen sein.

Eine Auswerteelektronik 13 ist eingangsseitig über Leitungen 15, 16 mit den Speiseleitungen 1, 2 verbunden, wie Fig. 1 zeigt. Über die Leitungen 15, 16 erfaßt die Auswerteelektronik 13 eventuell vorhandene Störimpulse auf den Speiseleitungen 1, 2.

Gemäß einer bevorzugten Ausführungsform der Erfindung ist die Auswerteelektronik 13 über Leitungen 17, 18 mit den Leitungen 5, 6 verbunden, um die in der Sekundärwicklung 4 induzierte Spannung zu erfassen. Über die Leitungen 17, 18 erfolgt in den beiden beschriebenen Betriebsarten der input für die Auswerteelektronik 13.

Die Auswerteelektronik 13 ist mittels Leitungen 19, 20 mit dem Umschaltrelais 12 verbunden und über eine Leitung 21 an einen Schaltkontakt 22 geschaltet. Ein zweiter Schaltkontakt in der Leitung 5 ist mit 23 bezeichnet.

Der Steuerkontakt 11 wird durch das Umschaltrelais 12 betätigt, und läßt sich, wie aus Fig. 1 ersichtlich ist, zwischen den Schaltkontakten 22 und 23 schalten. Der Schalter 11 ist weiterhin mit dem Auslöseorgan 7 über eine Leitung 36 verbunden.

Die Arbeitsweise der vorstehend beschriebenen Schaltung wird nachfolgend näher beschrieben.

Im gewöhnlichen Betrieb, wenn auf den Speiseleitungen 1, 2 die Netzspannung vorhanden ist, steuert die Auswerteelektronik 13 den Steuerkontakt 11 mittels dem Umschaltrelais 12 in diejenige Schaltstellung, in welcher der Steuerkontakt 11 auf den Kontakt 22 gelegt ist. In diesem Fall steuert die Auswerteelektronik 13 abhängig von dem über die Leitungen 15, 16 erfaßten Signal das Auslöseorgan 7. Werden über die Leitungen 17, 18 Fehlerströme von der Auswerteelektronik 13 erfaßt, steuert die Auswerteelektronik 13 das Auslöseorgan 7 derart, daß die Schaltkontakte 8, 9 nach einer kurzen Verzögerung geöffnet werden. Der bestimmungsgemäße Gebrauch des Fehlerstromschutzschalters also mit den durch die Auswerteelektronik 13 abverlangten Eigenschaften wie Kurzverzögerung und Selektivität erfolgt bei vorhandener Netzspannung. Wird nun die Netzspannung unterbrochen, beispielsweise durch einen defekten Neutralleiter bzw. eine defekte Speiseleitung 1, 2, wird gemäß der Erfindung der Steuerkontakt 11 auf den Kontakt 23 geschaltet, infolgedessen die Auswerteelektronik überbrückt wird. Hierdurch wird die Sekundärwicklung 4 des Summenstromwandlers 3 direkt über die Leitungen 5, 6 mit dem Auslöseorgan 7 verbunden, so daß bei Auftreten eines zusätzlichen Fehlers, beispielsweise durch Berühren des spannungsführenden Hauptleiters bzw. der spannungsführenden Speiseleitung eine Auslösung in bekannter Weise durch das Auslöseorgan 7 und die mit diesem mechanisch gekoppelten Schaltkontakte 8, 9 sichergestellt ist. In diesem Fall arbeitet der Fehlerstromschutzschalter weder kurzverzögert noch selektiv, was nachfolgend noch näher erläutert wird und aus sicherheitstechnischen Gründen erwünscht ist.

Mit der erfindungsgemäßen Schaltung wird eine netzspannungsunabhängige Funktion eines Fehlerstromschutzschalters bei gleichzeitig definierter Vorgabe einer Kurzverzögerung oder Strom- und Zeitselektivität realisiert. Dies wird mittels der Auswerteelektronik sichergestellt, die gemäß einer bevorzugten Ausführungsform eine Verzögerungsschaltung enthält, die jedoch nur bei nicht gestörten Netzverhältnissen wirksam ist. Wird die Netzspannung unterbrochen, dann arbeitet der Fehlerstromschutzschalter netzspannungsunabhängig wie ein Fehlerstromschutzschalter bekannter Art. Der Fehlerstromschutzschalter bleibt demnach auch bei Netzspannungsunterbrechung eingeschaltet und löst erst dann aus, wenn ein Isolationsfehler im Netz bzw. in der Anlage auftritt oder eine Berührung eines spannungsführenden Teiles erfolgt. Infolge der kurzzeitigen Verzögerung, die im ersten Betriebszustand durch die in der Auswerteelektronik 13 vorgesehene Verzögerungsschaltung hervorgerufen wird, d.h. bei derjenigen Schaltstellung, in welcher der Steuerschalter 11 auf dem Schaltkontakt 22 liegt, ist der Fehlerstromschutzschalter unempfindlich gegen transiente Überspannungen, wie sie durch Schaltvorgänge oder durch atmosphärische Störungen hervorgerufen werden können, bzw. verhält sich der Fehlerstromschutzschalter im Vergleich zu einem konventionellen Fehlerstromschutzschalter selektiv.

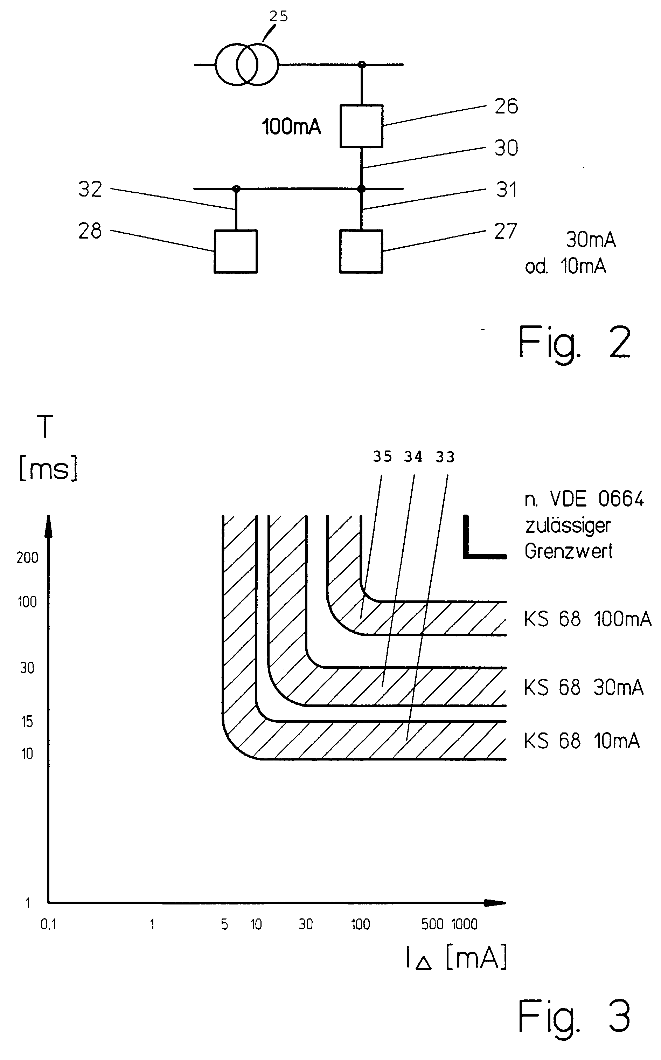

Fig. 2 zeigt eine schematische Darstellung mit verschiedenen Zweigen, die jeweils mit Fehlerstromschutzschaltern der vorstehend beschriebenen Art ausgerüstet sind. Mit 25 ist die Speisequelle bezeichnet. Mit 26, 27, 28 sind bei dieser Ausführungsform drei Fehlerstromschutzschalter der vorstehend beschriebenen Art bezeichnet, die jeweils in einem Zweig 30, 31, 32 eingesetzt sind. Bei dieser Ausführungsform hat beispielsweise der Fehlerstromschutzschalter 26 einen Auslösenennstrom von 100 mA, der Fehlerstromschutzschalter 27 einen Auslösestromnennwert von 30 mA und der Fehlerstromschutzschalter 28 einen Auslösestromnennwert von 10 mA. Eine derartige kaskadenförmige Schaltung der in Verbindung mit Fig. 1 erläuterten Fehlerstromschutzschalter 26, 27, 28 ermöglicht ein selektives Auslösen desjenigen Fehlerstromschutzschalters, der dem Fehlerort am nächsten liegt. Auf diese Weise sind die Fehlerstromschutzschalter 26-28 selektiv staffelbar, und es wird die Abschaltung nur des defekten Stromkreises herbeigeführt.

Die vorstehend erwähnten Auslösenennströme sind nur beispielhaft dargestellt und können beliebig geändert werden.

Fig. 3 veranschaulicht als Beispiel den Auslösebereich von drei zueinander absolut selektiven Fehlerstromschutzschaltern. Die jeweiligen Auslösebereiche sind mit 33, 34, 35 bezeichnet. Der Bereich 33 entspricht einem Auslösestrom von 10 mA, der Bereich 34 einem Auslösebereich von 30 mA und der Bereich 35 einem Auslösebereich von 100 mA.

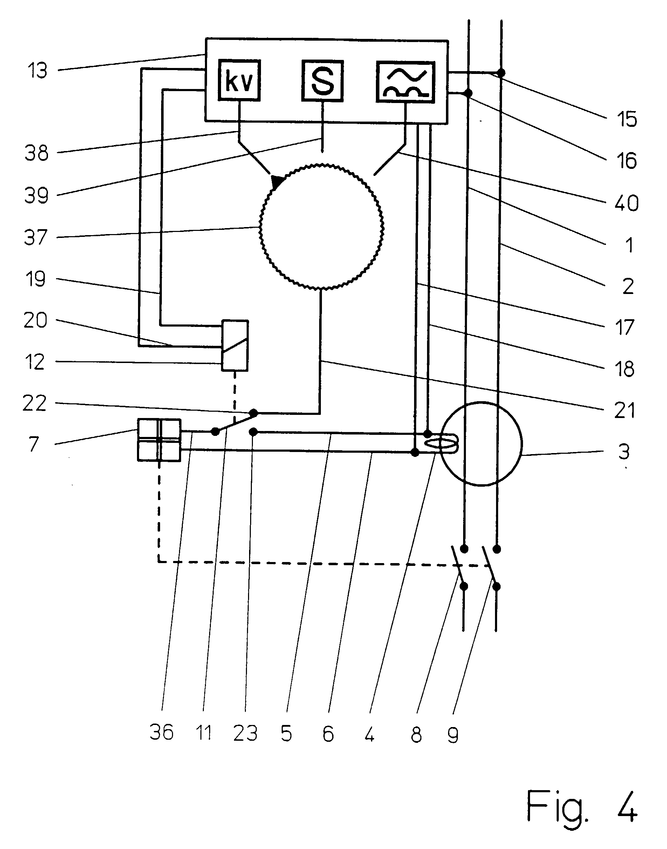

Gemäß einer weiteren, in Fig. 4 gezeigten Ausführungsform ist der erfindungsgemäße Fehlerstromschutzschalter mit einem zusätzlichen Bedienschalter 37 versehen, durch welchen ein Anwender die Funktionen "kurzverzögert", "selektive Staffelung" oder "Gleichstromsensivität" durch Stellung des Bedienschalters 37 auf die Kontakte 38, 39 oder 40 einstellen kann.

Die Erfindung schafft einen Fehlerstromschutzschalter, der abhängig von der Funktion einer Auswerteelektronik in zwei unterschiedlichen Betriebszuständen arbeitet. Dieser Fehlerstromschutzschalter weist eine Pulsstromsensitivität auf, die bei Vorhandensein der Netzspannung über eine in der Auswerteelektronik 13 enthaltene Verstärkerschaltung sichergestellt werden kann.

Gemäß einer bevorzugten Ausführungsform besteht das Auslöseorgan 7 aus einem Haltemagnetrelais mit Schaltschloß zur Betätigung der Schaltkontakte 8, 9.

Gemäß einer weiteren Ausführungsform der Erfindung ist das Umschaltrelais 12 in Form eines Reedrelais vorgesehen.

Durch die Verwendung der Netzspannung als Versorgungsspannung für die Auswerteelektronik 13 ist in einer weiteren Ausführungsform der erfindungsgemäße Fehlerstromschutzschalter gleichspannungsempfindlich gestaltet. Zu diesem Zweck beinhaltet die Auswerteelektronik bzw. das IC 13 bei einer bevorzugten Ausführungsform einen Frequenzgenerator, der netzspannungsabhängig einen Strom über die Sekundärwicklung 4 des Summenstromwandlers 3 schickt und diesen in einen wechselmagnetisierten Zustand versetzt. Dabei stellt sich ein dem ausgewählten Material des Summenstromwandlers entsprechender Permeabilitätsverlauf µᵣ ein. Dieser ist abhängig von einem durch einen Gleichfehlerstrom IΔ erzeugten und überlagterten Gleichfeld. Die durch den glatten Gleichfehlerstrom bewirkte Veränderung des Permeabilitätsverlaufs µᵣ verursacht eine Änderung der Induktivität des Summenstromwandlers und somit einen veränderten Spannungsabfall am Meßwiderstand der Auswerteelektronik. Beim Überschreiten eines definierten Schwellwertes wird die Auswerteelektronik aktiviert und die Schutzeinrichtung ausgelöst.

Gemäß einem weiteren Ausführungsbeispiel enthält die Auswerteelektronik 13 alternativ die für die Kurzverzögerung oder Selektivität vorgesehene Schaltung.

Bei einer weiteren Ausführungsform ist ein sogenannter failsafe-Betrieb möglich. Hierbei ist zusätzlich eine Selbstüberwachungseinheit vorgesehen, die bei Ausfall einzelner Bauelemente, insbesondere bei einem Defekt der Auswerteelektronik 13 oder bei Unterbrechung der Sekundärwicklung 4, das in dem Auslöseorgan 7 enthaltene Haltemagnetrelais deaktiviert und auf diese Weise die Schaltkontakte 8, 9 öffnet.

Derartige Fail/Safe-Schaltungen sind beispielsweise aus der DE- 42 05 208 und DE- 43 40 737 bekannt. Die heraus bekannten Schaltungen können dabei mit den Komponenten des beschriebenen Fehlerschutzschalters kombiniert werden.

Bei dem Fehlerstromschutzschalter nach Fig. 4 ist der Steuer- bzw. Schaltkontakt 11 wesentlich. Das Relais 12 fällt ab, wenn zwischen den Leitern 1 und 2 keine Spannung festgestellt wird, das heißt, daß der gesamte in Fig. 4 obere Teil der Schaltung einschließlich der Auswerteelektronik 13 mit Relais 12 unwirksam wird und damit der Steuerkontakt 11 auf den Gegenkontakt 23 angelegt wird, wodurch ein Berührungsstrom im Berührungsfalle erfaßt wird, ohne daß eine Netzspannungsversorgung vorliegt. Die Auswertelektronik 13 mit dem nachgeschalteten Relais 12 ist hingegen nur dann wirksam, wenn eine Netzspannung zwischen den Leitern 1 und 2 vorliegt. Bei dem Fehlerstromschutzschalter nach Fig. 4 enthält die Auswertelektronik 13 die Möglichkeit, auf Kurzverzögerung KV, Selektivität S oder Gleichstromsensivität einzustellen, das heißt alternativ eine dieser Möglichkeiten auszuwählen. Die Möglichkeit der Auswahl dieser verschiedenen Funktionen wie Kurzverzögerung, Selektivität oder Gleichstromsensivität stellt eine bevorzugte Ausführungsform dar und ist, wie aus der Beschreibung in Verbindung mit Fig. 1 hervorgeht, keine Notwendigkeit. Bei der Anordnung nach Fig. 1 wird eine Auswerteelektronik 13, vorzugsweise in Form eines IC verwendet, welcher auf eine der drei vorgenannten Möglichkeiten wie Kurzverzögerungen, Selektivität oder Gleichstromsensitivität eingestellt ist.

## Patentansprüche

1. Fehlerstromschutzschalter, insbesondere zur Isolationsüberwachung elektrischer Stromkreise,
mit einem Summenstromwandler (3), der eine aus Speiseleitungen gebildete Primärwicklung und eine Sekundärwicklung (4) aufweist, in welcher bei Auftreten eines Fehlerstroms in den Stromkreisen eine Spannung induziert wird,
und mit einem Auslöseorgan (7), welches Schaltkontakte (8, 9) zum Unterbrechen der Speiseleitungen (1, 2) steuert, an welche die Stromkreise angeschlossen sind,
**dadurch gekennzeichnet,**
daß ein Steuerkontakt (11) vorgesehen ist, der über eine Auswerteelektronik (13) in eine von mindestens zwei Schaltstellungen geschaltet wird,
wobei der Steuerkontakt (11) in einer ersten Schaltstellung (22) die Auswerteelektronik (13) mit dem Auslöseorgan (7) verbindet und in der zweiten Schaltstellung (23) die Sekundärwicklung (4) des Summenstromwandlers (3) an das Auslöseorgan (7) schaltet.

2. Fehlerstromschutzschalter nach Anspruch 1,
**dadurch gekennzeichnet,**
daß der Steuerkontakt (11) durch ein Umschaltrelais (12) geschaltet wird, welches von der Auswerteelektronik (13) gesteuert ist.

3. Fehlerstromschutzschalter nach Anspruch 1 oder 2,
**dadurch gekennzeichnet,**
daß das Umschaltrelais (12) ein Reedrelais ist.

4. Fehlerstromschutzschalter nach wenigstens einem der vorangehenden Ansprüche,
**dadurch gekennzeichnet,**
daß das Auslöseorgan (7) aus einem Schaltschloß und einem Haltemagnetrelais besteht.

5. Fehlerstromschutzschalter nach wenigstens einem der vorangehenden Ansprüche,
**dadurch gekennzeichnet,**
daß ein Bedienschalter (37) zur Betriebseinstellung vorgesehen ist.

6. Fehlerstromschutzschalter nach wenigstens einem der vorangehenden Ansprüche,
**dadurch gekennzeichnet,**
daß die Auswerteelektronik (13) eine elektronische Verstärkerschaltung und eine Verzögerungsschaltung aufweist.

7. Fehlerstromschutzschalter nach wenigstens einem der vorangehenden Ansprüche,
**dadurch gekennzeichnet,**
daß die Auswerteelektronik (13) einen Frequenzgenerator aufweist, welcher netzspannungsunabhängig einen Strom über die Sekundärwicklung (4) des Summenstromwandlers (3) leitet und den Summenstromwandler (3) in einen wechselmagnetisierten Zustand versetzt,
sowie einen Meßwiderstand,
daß bei Auftreten eines Gleichfehlerstromes die Induktivität des Summenstromwandlers (3) verändert und an dem Meßwiderstand ein Spannungsabfall verursacht wird, welcher bei Überschreiten eines vorbestimmten Schwellwertes die Auswerteelektronik (13) aktiviert und über das Auslöseorgan (7) die Schaltkontakte (8, 9) öffnen läßt.

8. Fehlerstromschutzschalter nach wenigstens einem der vorangehenden Ansprüche,
**dadurch gekennzeichnet,**
daß eine Selbstüberwachungseinheit vorgesehen ist, welche bei Ausfall mindestens eines Bauelementes über das Auslöseorgan (7) die Schaltkontakte (8, 9) öffnet.

## Claims

1. An earth leakage circuit breaker, particularly for monitoring the insulation of electrical circuits, with a summing current transducer (3) which comprises a primary winding formed by supply leads and a secondary winding (4) in which a voltage is induced when a leakage current arises in the circuit, and with a tripping member (7) which controls switch contacts (8, 9) for disconnecting the supply leads (1, 2) to which the circuits are connected,
**characterized in that**
a control contact (11) is provided and is switched to one of at least two switching positions by means of processing electronics (13), the control contact (11) connecting the processing electronics (13) to the tripping member (7) in a first switching position (22) and connecting the secondary winding (4) of the summing current transducer (3) to the tripping member (7) in the second switching position (23).

2. An earth leakage circuit breaker according to Claim 1,
**characterized in that**
the control contact (11) is switched by a change-over relay (12) which is controlled by the processing electronics (13).

3. An earth leakage circuit breaker according to Claim 1 or Claim 2,
**characterized in that**
the change-over relay (12) is a reed relay.

4. An earth leakage circuit breaker according to at least one of the preceding claims,
**characterized in that**
the tripping member (7) is composed of a latching switch and a holding magnet relay.

5. An earth leakage circuit breaker according to at least one of the preceding claims,
**characterized in that**
a control switch (37) is provided for setting operation.

6. An earth leakage circuit breaker according to at least one of the preceding claims,
**characterized in that**
the processing electronics (13) comprise an electronic amplifier circuit and a delay circuit.

7. An earth leakage circuit breaker according to at least one of the preceding claims,
**characterized in that**
the processing electronics (13) comprise a frequency generator which, independently of the mains voltage, passes a current through the secondary winding (4) of the summing current transducer (3) and sets the summing current transducer (3) in an alternating magnetized state, as well as a measuring resistor,
in that, when a direct-current leakage current arises, the inductance of the summing current transducer (3) changes and a voltage drop is brought about in the measuring resistor which voltage drop, upon exceeding a predetermined threshold value, activates the processing electronics (13) and causes the switching contacts (8, 9) to be opened by means of the tripping member (7).

8. An earth leakage circuit breaker according to at least one of the preceding claims,
**characterized in that**
a self-regulating unit is provided and opens the switching contacts (8, 9) by means of the tripping member (7) upon failure of at least one component.

## Revendications

1. Disjoncteur à courant de défaut, notamment pour le contrôle de l'isolation de circuits électriques,
comportant un transformateur d'intensité somme (3), qui comporte un enroulement primaire formé par des lignes d'alimentation, et un enroulement secondaire (4) et dans lequel une tension est induite lors de l'apparition d'un courant de défaut dans les circuits, et comportant un organe de déclenchement (7), qui commande des contacts de coupure (8, 9) pour interrompre les lignes d'alimentation (1, 2), auxquelles sont raccordés les circuits,
caractérisé en ce
qu'il est prévu un contact de commande (11), qui est commuté, au moyen d'un système électronique d'exploitation (13), dans l'une d'au moins deux positions de commutation,
auquel cas dans une première position de commutation (22), le contact de commande (11) relie le système électronique d'exploitation (13) à l'organe de déclenchement (7) et, dans la seconde position de commutation (23), connecte l'enroulement secondaire (4) du transformateur d'intensité somme (3) à l'organe de déclenchement (7).

2. Disjoncteur à courant de défaut selon la revendication 1, caractérisé en ce
que le contact de commande (11) est commuté par un relais de commutation (12), qui est commandé par le système électronique d'exploitation (13).

3. Disjoncteur à courant de défaut selon la revendication 1 ou 2, caractérisé en ce
que le relais de commutation (12) est un relais Reed.

4. Disjoncteur à courant de défaut selon au moins l'une des revendications précédentes, caractérisé en ce
que l'organe de déclenchement (7) est constitué par un verrou de maintien et un relais magnétique de maintien.

5. Disjoncteur à courant de défaut selon au moins l'une des revendications précédentes, caractérisé en ce
qu'un commutateur de fonctionnement (37) est prévu pour le réglage du fonctionnement.

6. Disjoncteur à courant de défaut selon au moins l'une des revendications précédentes, caractérisé en ce
que le système électronique d'exploitation (13) comporte un circuit amplificateur électronique et un circuit de temporisation.

7. Disjoncteur à courant de défaut selon au moins l'une des revendications précédentes, caractérisé en ce
que le système électronique d'exploitation (13) comporte un générateur de fréquence, qui, indépendamment de la tension du réseau, envoie un courant dans l'enroulement secondaire (4) du transformateur d'intensité somme (3) et place le transformateur d'intensité somme (3) dans un état aimanté alternatif,
ainsi qu'une résistance de mesure,
que lors de l'apparition d'un courant continu de défaut, l'inductance du transformateur d'intensité somme (3) est modifiée et qu'une chute de tension est provoquée dans la résistance de mesure, chute de tension qui, lors du dépassement d'une valeur de seuil prédéterminée, active le système électronique d'exploitation (13) et fait ouvrir, par l'intermédiaire de l'organe de déclenchement (7), les contacts de coupure (8, 9).

8. Disjoncteur à courant de défaut selon au moins l'une des revendications précédentes, caractérisé en ce
qu'il est prévu une unité d'autocontrôle, qui, en cas de défaillance d'au moins un composant, ouvre les contacts de coupure (8, 9) par l'intermédiaire de l'organe de déclenchement (7).
